# EUROPEAN PATENT SPECIFICATION

(11) **EP 4 498 443 B1**
(45) Date of publication and mention of the grant of the patent: **30.07.2025**
(21) Application number: 24159344.1
(22) Date of filing: 23.02.2024
(51) Int. Cl.: H01M 4/131, H01M 4/485, H01M 4/525

(54) **SECONDARY BATTERY, BATTERY PACK, VEHICLE, AND STATIONARY POWER SUPPLY**
SEKUNDÄRBATTERIE, BATTERIEPACK, FAHRZEUG UND STATIONÄRE STROMVERSORGUNG
BATTERIE SECONDAIRE, BLOC-BATTERIE, VÉHICULE ET ALIMENTATION ÉLECTRIQUE FIXE

(30) Priority: 25.07.2023 JP 2023120660
(43) Date of publication of application: 29.01.2025
(73) Proprietor: Kabushiki Kaisha Toshiba, Tokyo 105-0023 (JP)
(72) Inventor: Murata, Yoshiaki, Tokyo, 105-0023 (JP); Harada, Yasuhiro, Tokyo, 105-0023 (JP); Takami, Norio, Tokyo, 105-0023 (JP)
(74) Representative: Hoffmann Eitle

(56) References cited:
- CN-B- 103 794 777
- CN-B- 109 904 424
- ZHANG JIANNING ET AL: "Boosted electrochemical performance of LiNi0.5Mn1.5O4 via synergistic modification of Li+-Conductive Li2ZrO3 coating layer and superficial Zr-doping", ELECTROCHIMICA ACTA, ELSEVIER, AMSTERDAM, NL, vol. 343, 20 March 2020 (2020-03-20), XP086132218, ISSN: 0013-4686, [retrieved on 20200320], DOI: 10.1016/J.ELECTACTA.2020.136105
- ZHAO R ET AL: "Decoration by dual-phase Li2ZrO3islands with core-shell structures enhances the electrochemical performance of high-voltage LiNi0.5Mn1.5O4", APPLIED PHYSICS LETTERS, AMERICAN INSTITUTE OF PHYSICS, 2 HUNTINGTON QUADRANGLE, MELVILLE, NY 11747, vol. 116, no. 2, 14 January 2020 (2020-01-14), XP012243744, ISSN: 0003-6951, [retrieved on 20200114], DOI: 10.1063/1.5130432

## Description

### FIELD

Approaches relate to a secondary battery, battery pack, vehicle, and stationary power supply.

### BACKGROUND

In recent years, research and development of nonaqueous electrolyte secondary batteries such as lithium ion secondary batteries, as high-energy-density batteries, have actively been under progress. The nonaqueous electrolyte secondary batteries are anticipated as a power source for hybrid electric automobiles, electric automobiles, and an uninterruptible power supply in portable phone base stations.

In particular, a battery using a lithium nickel manganese oxide (LNMO) having a high discharge potential of approximately 4.7 V (vs. Li/Li⁺) based on metallic lithium as a positive electrode active material in a positive electrode can realize a high energy density, and thus has attracted much attention. However, since LNMO has an extremely high discharge potential, in a battery using LNMO as a positive electrode active material, gas is generated due to the decomposition of an organic solvent contained in a nonaqueous electrolyte at the positive electrode, and accordingly, the battery is likely to swell CN 109904424 b discloses a secondary battery comprising a positive electrode containing lithium nickel manganese oxide.

### BRIEF DESCRIPTION OF THE DRAWINGS

FIG. 1 is a cross-sectional view schematically showing an example of a secondary battery according to an approach.
FIG. 2 is an enlarged cross-sectional view of section A of the secondary battery shown in FIG. 1.
FIG. 3 is a partially cut-out perspective view schematically showing another example of the secondary battery according to an approach.
FIG. 4 is an enlarged cross-sectional view of section B of the secondary battery shown in FIG. 3.
FIG. 5 is a cross-sectional view showing yet another example of the secondary battery according to an approach.
FIG. 6 is a cross-sectional view taken along a line VI-VI of the secondary battery shown in FIG. 5.
FIG. 7 is a perspective view schematically showing an example of a battery module according to an approach.
FIG. 8 is a perspective view schematically showing an example of a battery pack according to an approach.
FIG. 9 is an exploded perspective view schematically showing another example of a battery pack according to an approach.
FIG. 10 is a block diagram showing an example of an electric circuit of the battery pack shown in FIG. 9.
FIG. 11 is a partially see-through diagram schematically showing an example of a vehicle according to an approach.
FIG. 12 is a diagram schematically showing an example of a control system related to an electric system in the vehicle according to an approach.
FIG. 13 is a block diagram showing an example of a system including a stationary power supply according to an approach.

### DETAILED DESCRIPTION

According to one approach, provided is a secondary battery including a positive electrode containing a positive electrode active material, a negative electrode containing a negative electrode active material, a separator between the positive electrode and the negative electrode, and an electrolyte. At least one of the positive electrode, the negative electrode, and the separator contains an alkali metal oxide. 50% or more of alkali metal ions included in the alkali metal oxide is exchangeable with protons. Among the positive electrode active material and the negative electrode active material, a number of active material particles in contact with the alkali metal oxide is 10% or less of the whole.

According to another approach, a battery pack including the above secondary battery is provided.

According to another approach, a vehicle including the above battery pack is provided.

According to another approach, a stationary power supply including the above battery pack is provided.

According to the above approaches, a secondary battery and battery pack having excellent cycle life performance are provided, as well as a vehicle and a stationary power supply including the battery pack.

A spinel type lithium manganate, which is conventionally used as an active material, has been known to act as a strong oxidizing agent, and to therefore react with an electrolytic solution or an electrolyte salt, thereby generating protons (H⁺). As a configuration of a battery having a high electromotive force, a spinel type lithium manganate is used as a positive electrode active material, and a titanium-containing oxide having a low action potential such as a spinel type lithium titanate is used as a negative electrode active material; however, it has been known that protons are reduced on such a negative electrode, thereby generating hydrogen gas. A cobalt-containing oxide such as a lithium cobalt oxide exhibits an action of oxidizing the generated hydrogen gas back into protons Therefore, as a measure against the gas generation, it has been known to treat hydrogen gas by using the spinel type lithium manganate with a cobalt-containing oxide mixed therein.

A lithium composite oxide exhibiting an operating potential of 4.4 V or more based on metallic lithium (vs. Li/Li⁺) such as a lithium nickel manganese oxide (LNMO) also reacts with an electrolytic solution or an electrolyte salt to generate hydrogen gas. However, in a case where the cobalt-containing oxide is used together with a lithium composite oxide having an operating potential of 4.4 V (vs. Li/Li⁺) or more, the action of oxidizing hydrogen gas to protons cannot be sufficiently obtained. The reason therefor is that the crystal structure of the cobalt-containing oxide becomes unstable at an operating potential of 4.4 V (vs. Li/Li⁺) or more. Since the crystal structure of the cobalt-containing oxide becomes unstable, not only is the above-mentioned action unobtainable, but rather, the gas generation amount increases.

As one solution, the cobalt-containing oxide can be coated with a coating layer containing a solid electrolyte. In a case where the cobalt-containing oxide is coated with the coating layer, the crystal structure of the cobalt-containing oxide can be stably maintained even in a case where the electrode is used at a potential of 4.4 V (vs. Li/Li⁺) or more. The reason for this is considered to be that the elution of metal is reduced. The stabilized cobalt-containing oxide can oxidize hydrogen gas generated due to the lithium composite oxide, to protons.

As described above, the treatment of hydrogen with the cobalt-containing oxide has been conventionally known as a measure against gas generation. However, even when hydrogen gas is made into protons by the cobalt-containing oxide, protons are reduced again on the negative electrode to revert to hydrogen gas. That is, protons are in a state of reciprocating the oxidation-reduction reaction of hydrogen in a battery.

Hereinafter, approaches will be described with reference to the drawings. The same reference signs are applied to common components throughout the approaches and overlapped explanations are thereby omitted. Each drawing is a schematic view for promoting explanations of the approach and understanding thereof, and thus some of the shape, size and ratio may differ from those in an actual device, but they can be appropriately design-changed, taking the following explanations and known technology into consideration.

### (First Approach)

The secondary battery according to the first approach includes a positive electrode containing a positive electrode active material, a negative electrode containing a negative electrode active material, a separator between the positive electrode and the negative electrode, and an electrolyte. An alkali metal oxide is included in at least one of the positive electrode, the negative electrode, and the separator. The alkali metal oxide is one, for which 50% or more of alkali metal ions included therein are capable of being exchanged with protons. Of the positive electrode active material and the negative electrode active material, a number of active material particles in contact with the alkali metal oxide is 10% or less of the whole.

In the secondary battery, protons generated by the oxidation reaction at the positive electrode are trapped by the exchange (A⁺/H⁺ exchange) between alkali metal ions contained in the alkali metal compound and the protons, before being reduced at the negative electrode. By preventing the reduction of protons in this manner, the gas generation itself is prevented. That is, even in a case where charging and discharging are repeated, it is possible to suppress the secondary battery from being filled with hydrogen gas. Therefore, such a secondary battery can achieve excellent cycle life performance.

The secondary battery may be, for example, a lithium ion secondary battery. In addition, the secondary battery may be an aqueous electrolyte secondary battery containing an aqueous electrolyte. Alternatively, the secondary battery may be a nonaqueous electrolyte secondary battery containing a nonaqueous electrolyte.

The position of the alkali metal oxide to be subjected to proton exchange in the secondary battery can be selected from at least one of the inside of the positive electrode, the surface of the positive electrode, the inside of the separator, the surface of the separator, the inside of the negative electrode, and the surface of the negative electrode. In order to trap protons generated at the positive electrode before reaching the negative electrode, the alkali metal oxide is desirably contained inside the positive electrode, on the surface of the positive electrode, or at some point between the positive electrode and the negative electrode. Therefore, the alkali metal oxide is preferably included in the separator or the positive electrode rather than in the negative electrode. From the viewpoint of directly trapping protons, the alkali metal oxide is more preferably included on the positive electrode side of the separator, on the surface of the positive electrode, or inside the positive electrode. However, from the viewpoint of keeping an internal resistance of the positive electrode low, particles of the alkali metal oxide are preferably disposed on the surface of the positive electrode rather than dispersing the alkali metal oxide inside the positive electrode. In addition, since alkali metal ions inhibit the insertion/extraction of charge carriers such as lithium ions into and from the active material, it is desirable that a film covering the electrode surface is not formed in a case where the alkali metal oxide particles are disposed on the electrode surface, regardless of whether the surface is that of the positive electrode or the negative electrode.

Irrespective of the position where the alkali metal oxide is contained in the secondary battery, 10% or less in number of active material particles, among the whole of the positive electrode active material and the negative electrode active material, is in contact with the alkali metal oxide. Therefore, it is possible to avoid the alkali metal oxide from affecting the insertion/extraction of charge carriers by the active material, and ultimately, the charging and discharging. In a case where the alkali metal oxide is contained inside the positive electrode or disposed on the surface of the positive electrode, the number of positive electrode active material particles in contact with the alkali metal oxide is desirably kept to 10% or less of all the positive electrode active material particles. In a case where the alkali metal oxide is contained inside the negative electrode or disposed on the surface of the negative electrode, the number of negative electrode active material particles in contact with the alkali metal oxide is preferably kept to 10% or less of all the negative electrode active material particles. In a case where the alkali metal oxide is contained inside the separator or on the surface of the separator, as well, the proportion of the number of active material particles of the respective electrodes in contact with the alkali metal oxide is set to 10% or less of the whole.

The ratio of the specific surface area of the alkali metal oxide with respect to the specific surface area of the positive electrode active material is preferably two or more. By providing many more sites for trapping protons as compared with sites for the oxidation reaction that generate protons, trapping protons before reaching the negative electrode can be made more reliable.

Examples of the alkali metal oxide capable of having 50% or more of the alkali metal ions included be exchanged with protons include an oxide represented by AₓM_{y}O_{z}. Here, A represents an alkali metal element. That is, A is at least one selected from the group consisting of Li, Na, K, Cs, and Rb. M is at least one selected from the group consisting of Mg, Ca, Sr, Ba, Sc, Al, Y, Fe, La, Si, P, S, Ti, Zr, V, Nb, Ta, W, and Mo. Among these M, transition metals have the maximum oxidation number that is capable of being taken by the transition metal. The range of each subscript is, for example, in a case where y = 1, 0 < x ≤ 4 and 2 < z ≤ 4. Specific examples thereof include LiNbO₃, Li₃NbO₄, KNbO₃, K₂TiO₃, K₂Ti₄O₉, LiTaO₃, Li₂ZrO₃, and Na₃Al₂(PO₄)₃.

The content of the alkali metal ions (cation) in the alkali metal oxide directly represents the treatment amount of protons. Therefore, in order to maintain the proton trap ability, it is desirable to avoid a state where all alkali metal ions have been lost. In addition, an alkali metal oxide containing a transition metal tends to become decomposed after reaching a state where alkali metal ions have been completely lost. Upon subsequent oxidation of the transition metal, absorbed protons are released. Therefore, in a case of using an alkali metal oxide containing a transition metal, it is desirable to use an oxide of a transition metal in the most oxidized state with its oxidation number being the maximum oxidation number that can be taken, rather than a transition metal in a reduced state.

As an alkali metal oxide contained at the negative electrode side, an alkali metal oxide containing no transition metal is desirably selected. Therefore, it is desirable to include, on the negative electrode side, an oxide in which M is at least one selected from the group consisting of Mg, Ca, Sr, Ba, Sc, Al, Y, La, Si, P, S, and Zr, among oxides represented by AₓM_{y}O_{z} mentioned above. The negative electrode side as used herein includes not only the inside of the negative electrode and the surface of the negative electrode, but also a surface of the separator facing the negative electrode. The transition metal contained on the negative electrode side may become reduced during charging. The reduced transition metal may release protons during discharging. Accordingly, an alkali metal oxide containing no transition metal is desirably used on the negative electrode side.

As the alkali metal oxide, it is preferable to use an alkali metal oxide that does not contain any alkali metal ion other than an electrolyte main component. For example, in a lithium ion secondary battery using a lithium ion as a charge carrier, an alkali metal oxide that does not contain any alkali metal ion other than lithium is preferably used as the alkali metal oxide. In the exchange of alkali metal ions with protons (A⁺/H⁺ exchange), alkali metal ions are released out to the electrolyte when protons are absorbed from the electrolyte. In a case where lithium is contained as an alkali metal, lithium ions are released and can act as a charge carrier. Conversely, in a case where ions other than lithium ions are contained and released, as a result of the ions contributing to the insertion/extraction reaction with respect of the electrode, the battery performance may be deteriorated.

The separator is disposed between the positive electrode and the negative electrode. The positive electrode, the negative electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

Hereinafter, the positive electrode, negative electrode, electrolyte, separator, container member, negative electrode terminal, and positive electrode terminal will be described in detail.

### 1) Positive electrode

The positive electrode may include a positive electrode current collector and a positive electrode active material-containing layer. The positive electrode active material-containing layer may be formed on both of obverse and reverse surfaces or one surface of the positive electrode current collector. The positive electrode active material-containing layer may contain the positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y ≤ 1, and LiₓCoPO₄; 0 < x ≤ 1), iron sulfate (Fe₂(SO₄)₃), vanadium oxides (e.g., V₂O₅), and lithium nickel cobalt manganese composite oxide (LiₓNi_{1-5-z}Co_{y}Mn_{z}O₂; 0 < x ≤ 1, 0 < y < 1, 0 < z < 1, y + z < 1).

The positive electrode active material preferably includes a lithium composite oxide exhibiting an operating potential of 4.4 V or more based on metallic lithium. The positive electrode active material may be composed containing only lithium composite oxide(s) exhibiting an operating potential of 4.4 V (vs. Li/Li⁺) or more. In this case, since the operating potential of the positive electrode active material is high, a high battery capacity can be achieved.

One example of the lithium composite oxide exhibiting an operating potential of 4.4 V or more based on metallic lithium is an oxide represented by LiᵤM1ₓMn₂₋ₓO₄. Here, M1 is at least one selected from the group consisting of Mn, Ni, Fe, Co, Cr, Mg, Zn, Al, and Cu, u satisfies 0 < u ≤ 1, and x satisfies 0 < x ≤ 1. Specific examples thereof include LiNi_{0.5}Mn_{1.5}O₄ and LiCu_{0.5}Mn_{1.5}O₄.

Another example of the lithium composite oxide exhibiting an action potential of 4.4 V or more based on metallic lithium is a lithium nickel cobalt manganese composite oxide represented by LiₓNi_{1-y-z}Co_{y}Mn_{z}O₂ in which 0 < x ≤ 1, 0 < y < 0.3, 0 < z < 0.3, and y + z < 0.3 are satisfied. The lithium nickel cobalt manganese composite oxide is a so-called high nickel compound, in which nickel accounts for 70% among nickel, cobalt, and manganese.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, graphite, carbon nanofiber, and carbon nanotube. One of these may be used as the electro-conductive agent, or two or more may be used in combination as the electro-conductive agent. The electro-conductive agent may be omitted.

The positive electrode active material, electro-conductive agent, and binder in the positive electrode active material-containing layer are preferably blended in proportions of 80% by mass or more and 95% by mass or less, 3% by mass or more and 18% by mass or less, and 2% by mass or more and 17% by mass or less, respectively. By adjusting the amount of the electro-conductive agent to 3 mass% or more, the above-described effects can be exhibited. By adjusting the amount of the electro-conductive agent to 18 mass% or less, the proportion of the electro-conductive agent that comes in contact with the electrolyte can be reduced. If this proportion is low, the decomposition of the electrolyte on the surface of the electro-conductive agent under high-temperature storage can be reduced. By adjusting the amount of the binder to 2 mass% or more, a sufficient electrode strength can be obtained. By adjusting the blending amount of the binder, which is an insulating material, to 17 mass% or less, an internal resistance can be reduced.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode can be produced, for example, through the following method. First, a positive electrode active material, an electro-conductive agent, and a binder are suspended in a solvent to prepare a slurry. In a case where a proton-exchanging alkali metal oxide is contained in the positive electrode, the alkali metal oxide is further added to the slurry. The slurry is applied onto one surface or both surfaces of the current collector. Next, the applied slurry is dried to obtain a stack of the positive electrode active material-containing layer and the current collector. Thereafter, pressing is performed on the stack. In this manner, a positive electrode is produced.

Alternatively, the positive electrode may be produced through the following method. First, a positive electrode active material, an electro-conductive agent, and a binder are mixed to obtain a mixture. Then, the mixture is formed into a pellet form. Next, by placing these pellets on the current collector, a positive electrode can be obtained. In a case where a proton-exchanging alkali metal oxide is contained in the positive electrode, the alkali metal oxide may be further blended in the pellets, or the alkali metal oxide may be dispersed among the pellets.

### 2) Negative electrode

The negative electrode may include a negative electrode current collector and a negative electrode active material-containing layer. The negative electrode active material-containing layer may be formed on both of obverse and reverse surfaces or one surface of the negative electrode current collector. The negative electrode active material-containing layer may contain the negative electrode active material, and optionally an electro-conductive agent and a binder.

Examples of the negative electrode active material include lithium titanate having a ramsdellite structure (e.g., Li_{2+y}Ti₃O₇, 0 ≤ y ≤ 3), lithium titanate having a spinel structure (e.g., Li₄₊ₓTi₅O₁₂, 0 ≤ x ≤ 3), titanium dioxide (TiO₂), anatase titanium dioxide, rutile titanium dioxide, niobium pentoxide (Nb₂O₅), hollandite titanium composite oxide, orthorhombic titanium-containing composite oxides, and monoclinic niobium titanium oxides.

Examples of the orthorhombic titanium-containing composite oxide include a compound represented by Li₂₊ₐM^{I}_{2-b}Ti_{6-c}M^{II}_{d}O_{14+σ}. Here, M^{I} is at least one selected from the group consisting of Sr, Ba, Ca, Mg, Na, Cs, Rb and K. M^{II} is at least one selected from the group consisting of Zr, Sn, V, Nb, Ta, Mo, W, Y, Fe, Co, Cr, Mn, Ni and Al. The respective subscripts in the composition formula are specified as follows: 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing composite oxide include Li₂₊ₐNa₂Ti₆O₁₄ (0 ≤ a ≤ 6) .

Examples of the monoclinic niobium titanium oxide include a compound represented by LiₓTi_{1-y}M1_{y}Nb_{2-z}M2_{z}O_{7+δ}. Here, M1 is at least one selected from the group consisting of Zr, Si, and Sn. M2 is at least one selected from the group consisting of V, Ta, and Bi. The respective subscripts in the composition formula are specified as follows: 0 ≤ x ≤ 5, 0 ≤ y < 1, 0 ≤ z < 2, and -0.3 ≤ δ ≤ 0.3. Specific examples of the monoclinic niobium titanium composite oxide include LiₓNb₂TiO₇ (0 ≤ x ≤ 5) .

Another example of the monoclinic niobium titanium oxide is a compound represented by LiₓTi_{1-y}M3_{y+z}Nb_{2-z}O_{7-δ}. Here, M3 is at least one selected from the group consisting of Mg, Fe, Ni, Co, W, Ta, and Mo. The respective subscripts in the composition formula are specified as follows: 0 ≤ x < 5, 0 ≤ y < 1, 0 ≤ z < 2, and -0.3 ≤ δ ≤ 0.3.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle.

The binder is added to fill gaps among the dispersed negative electrode active material and also to bind the negative electrode active material with the negative electrode current collector. Examples of the binder include polytetrafluoroethylene (PTFE), polyvinylidene fluoride (PVdF), fluororubber, styrene-butadiene rubber, polyacrylate compounds, imide compounds, carboxymethyl cellulose (CMC), and salts of CMC. One of these may be used as the binder, or alternatively, two or more may be used in combination as the binder.

Regarding the blending proportions of negative electrode active material, electro-conductive agent and binder in the negative electrode active material-containing layer, for example, the negative electrode active material, electro-conductive agent and binder are preferably blended in proportions of 70% by mass to 96% by mass, 2% by mass to 28% by mass, and 2% by mass to 28% by mass, respectively. When the amount of electro-conductive agent is 2% by mass or more, the current collection performance of the negative electrode active material-containing layer can be improved. When the amount of binder is 2% by mass or more, binding between the negative electrode active material-containing layer and current collector is sufficient, whereby excellent cycling performances can be expected. On the other hand, an amount of each of the electro-conductive agent and binder is preferably 28% by mass or less, in view of increasing the capacity.

There may be used for the negative electrode current collector, a material which is electrochemically stable at the potential at which lithium (Li) is inserted into and extracted from the active material, for example, a potential higher than 1.0 V (vs. Li/Li⁺). For example, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 µm to 20 µm. The current collector having such a thickness can maintain balance between the strength and weight reduction of the electrode.

The negative electrode current collector may include a portion where the negative electrode active material-containing layer is not formed on a surface thereof. This portion may serve as a negative electrode current collecting tab.

The density of the negative electrode active material-containing layer (excluding the current collector) is preferably from 1.8 g/cm³ to 2.8 g/cm³. The negative electrode having the density of the negative electrode active material-containing layer within this range is excellent in energy density and ability of holding the electrolyte. The density of the negative electrode active material-containing layer is more preferably from 2.1 g/cm³ to 2.6 g/cm³.

The negative electrode may, for example, be fabricated by the same method as that for the positive electrode, except that the negative electrode active material is used.

### 3) Electrolyte

As the electrolyte, for example, a liquid aqueous electrolyte, gel aqueous electrolyte, liquid nonaqueous electrolyte or gel nonaqueous electrolyte may be used.

The liquid aqueous electrolyte is an aqueous solution prepared by dissolving an electrolyte salt as solute in an aqueous solvent. In the aqueous solution, the aqueous solvent amount is preferably 1 mol or more, and more preferably 3.5 mol or more, with respect to 1 mol of salt as solute.

As the aqueous solvent, a solution including water can be used. The solution including water may be pure water, or may be a mixed solvent of water and an organic solvent. The proportion of water included in the aqueous solvent is, for example, 50% by volume or more, and preferably, 90% by volume or more.

Whether the electrolyte contains water can be examined by GC-MS (Gas Chromatography - Mass Spectrometry). The salt concentration and the water content in the aqueous electrolyte can be measured by, for example, ICP (Inductively Coupled Plasma) emission spectrometry. The molar concentration (mol/L) can be calculated by measuring a predetermined amount of aqueous electrolyte and calculating the concentration of contained salt. In addition, the number of moles of the solute and the solvent can be calculated by measuring the specific gravity of the aqueous electrolyte.

As the electrolyte salt included in the aqueous electrolyte, for example, lithium salts such as lithium chloride (LiCl), lithium bromide (LiBr), lithium hydroxide (LiOH), lithium sulfate (Li₂SO₄), lithium nitrate (LiNO₃), lithium acetate (CH₃COOLi), lithium oxalate (Li₂C₂O₄), lithium carbonate (Li₂CO₃), lithium bis(trifluoromethanesulfonyl)imide (LiTFSI; LiN(SO₂CF₃)₂), lithium bis (fluorosulfonyl) imide (LiFSI; LiN(SO₂F)₂), lithium bis(oxalate)borate (LiBOB: LiB[(OCO)₂]₂), and mixtures thereof may be used.

The mol concentration of lithium ions in the aqueous electrolyte is preferably 3 mol/L or more, preferably 6 mol/L or more, and preferably 12 mol/L or more. When the concentration of lithium ions in the aqueous electrolyte is high, electrolysis of the aqueous solvent at the negative electrode tends to be suppressed.

A pH of the aqueous electrolyte is preferably 3 to 14, and more preferably 4 to 13. The pH is a value measured at 25°C.

The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt used in the liquid nonaqueous electrolyte include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), lithium bistrifluoromethylsulfonylimide (LiN(CF₃SO₂)₂), and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC) ; cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE) ; γ-butyrolactone (GBL), acetonitrile (AN), and sulfolane (SL). These organic solvents may be used singularly or as a mixed solvent.

The gel aqueous electrolyte is prepared by obtaining a composite of a liquid aqueous electrolyte and a polymeric material. Similarly, the gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of 1 × 10⁻⁶ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula Li₁₊ₓMα₂(PO₄)₃. Mα in the above general formula is, for example, one or more selected from the group consisting of titanium (Ti), germanium (Ge), strontium (Sr), zirconium (Zr), tin (Sn), aluminum (Al), and calcium (Ca) . The subscript x is within the range of 0 ≤ x ≤ 2.

Specific examples of the lithium phosphate solid electrolyte having the NASICON structure include a LATP compound represented by Li₁₊ₓAlₓTi₂₋ₓ(PO₄)₃ where 0.1 ≤ x ≤ 0.5; a compound represented by Li₁₊ₓAl_{y}Mβ_{2-y}(PO₄)₃ where Mβ is one or more selected from the group consisting of Ti, Ge, Sr, Zr, Sn, and Ca, 0 ≤ x ≤ 1, and 0 ≤ y ≤ 1; a compound represented by Li₁₊ₓAlₓGe₂₋ₓ(PO₄)₃ where 0 ≤ x ≤ 2; a compound represented by Li₁₊ₓAlₓZr₂-ₓ(PO₄)₃ where 0 ≤ x ≤ 2; a compound represented by Li_{1+x+y}AlₓMγ₂₋ₓSi_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCaₓ(PO₄)₃ where 0 ≤ x < 1.

In addition to the above lithium phosphate solid electrolyte, examples of the oxide solid electrolyte include amorphous LIPON compounds represented by LiₓPO_{y}N_{z} where 2.6 ≤ x ≤ 3.5, 1.9 ≤ y ≤ 3.8, and 0.1 ≤ z ≤ 1.3 (e.g., Li_{2.9}PO_{3.3}N_{0.46}); a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃Mo₂₋ₓZrₓO₁₂ where Mδ is one or more selected from the group consisting of Nb and Ta, and 0 ≤ x ≤ 2 (e.g., Li₇La₃Zr₂O₁₂); and a compound having a perovskite structure and represented by La_{2/3-x}LiₓTiO₃ where0.3 ≤ x ≤ 0.7.

One or more among the above compounds may be used as the solid electrolyte. Two or more of the above solid electrolytes may be used, as well.

### 4) Separator

The separator may be made of, for example, a porous film or synthetic resin nonwoven fabric including polyethylene (PE), polypropylene (PP), cellulose, or polyvinylidene fluoride (PVdF) . In view of safety, a porous film made of polyethylene or polypropylene is preferred. This is because at a certain temperature, such a porous film melts and can thereby shut off current.

As the separator, a solid electrolyte layer containing solid electrolyte particles may also be used. The solid electrolyte layer may contain one species of solid electrolyte particles or may contain plural species of solid electrolyte particles. The solid electrolyte layer may be a solid electrolyte composite film containing solid electrolyte particles. The solid electrolyte composite film is obtained by, for example, forming solid electrolyte particles into a film form using a polymeric material.

In a case where the alkali metal oxide capable of proton exchange is contained in the separator, for example, the alkali metal oxide is contained in the solid electrolyte layer. Furthermore, the solid electrolyte layer may contain at least one selected from the group consisting of a plasticizer and an electrolyte salt. With the solid electrolyte layer containing an electrolyte salt, for example, the alkali metal ion conductivity in the solid electrolyte layer can be further enhanced.

Examples of the polymeric material include those of a polyether-base, a polyester-base, a polyamine-base, a polyethylene-base, a silicone-base, and a polysulfide-base.

As the solid electrolyte, for example, the above-mentioned solid substances having Li ion conductivity may be used.

In a case where the alkali metal oxide capable of proton exchange is disposed on the surface of the separator, the alkali metal oxide particles may be disposed on one surface or both surfaces of the separator, regardless of the form of the separator, such as a porous film, a nonwoven fabric, or a solid electrolyte layer.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

### 6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

### 7) Positive Electrode Terminal

The positive electrode terminal may be made of, for example, a material that is electrically stable in the potential range of 3 V to 5 V (vs. Li/Li⁺) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the approach will be more concretely described with reference to the drawings.

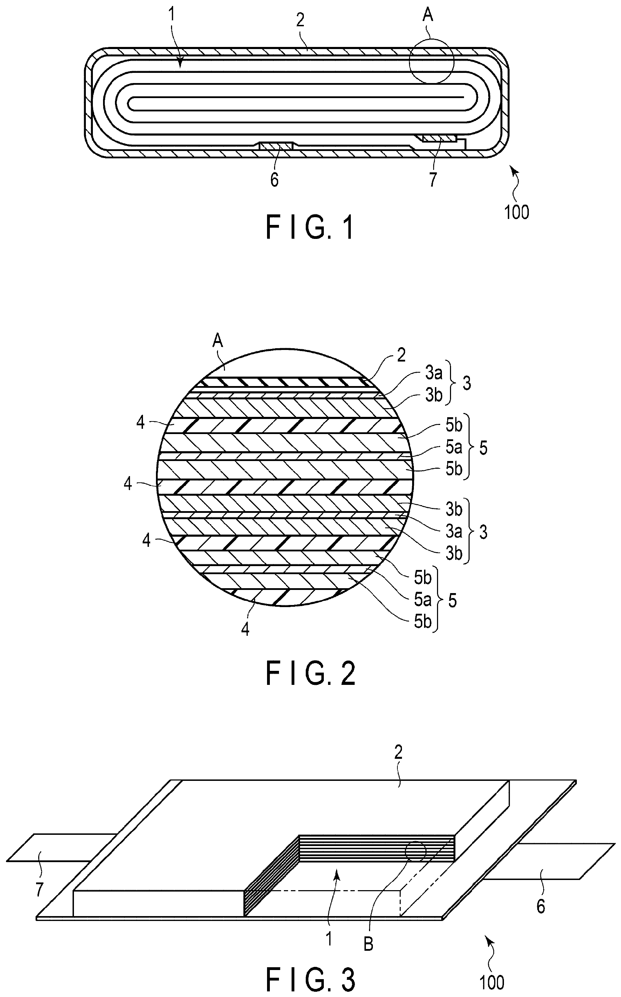

FIG. 1 is a cross-sectional view schematically showing an example of the secondary battery. FIG. 2 is an enlarged cross-sectional view of section A of the secondary battery shown in FIG. 1.

The secondary battery 100 shown in FIGS. 1 and 2 includes a bag-shaped container member 2, an electrode group 1, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 1, the electrode group 1 is a wound electrode group in a flat form. The wound electrode group 1 in a flat form includes a negative electrode 3, a separator 4, and a positive electrode 5, as shown in FIG. 2. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 2. For the other portions of the negative electrode 3, negative electrode active material-containing layers 3b are formed on both of obverse and reverse surfaces of the negative electrode current collector 3a.

The positive electrode 5 includes a positive electrode current collector 5a and positive electrode active material-containing layers 5b formed on both of obverse and reverse surfaces of the positive electrode current collector 5a.

As shown in FIG. 1, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

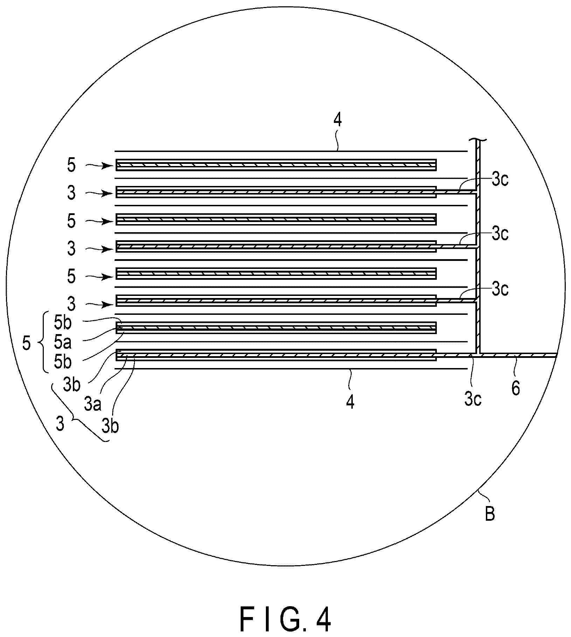

The secondary battery according to the approach is not limited to the secondary battery of the structure shown in FIGS. 1 and 2, and may be, for example, a battery of a structure as shown in FIGS. 3 and 4.

FIG. 3 is a partially cut-out perspective view schematically showing another example of the secondary battery. FIG. 4 is an enlarged cross-sectional view of section B of the secondary battery shown in FIG. 3.

The secondary battery 100 shown in FIGS. 3 and 4 includes an electrode group 1, a container member 2, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 4, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces thereof.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 4, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

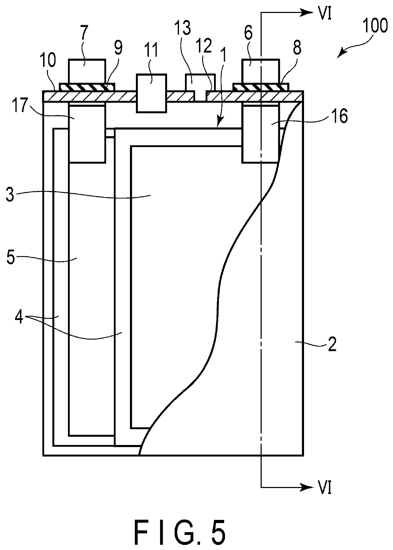

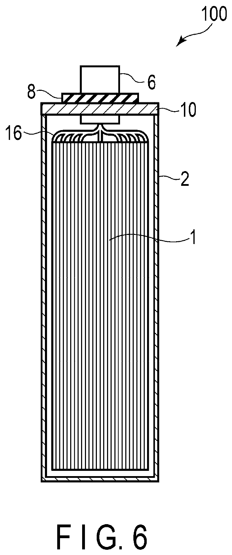

Details of yet another example of the secondary battery according to the approach will be described. FIG. 5 is a cross-sectional view schematically showing an example of the secondary battery according to the approach. FIG. 6 is a sectional view of the secondary battery shown in FIG. 5 taken along a line VI-VI.

An electrode group 1 is housed in a container member 2 made of a rectangular tubular metal container. The electrode group 1 includes a negative electrode 3, a separator 4, and a positive electrode 5. The electrode group 1 has a structure with the separator 4 intervened between the positive electrode 5 and the negative electrode 3, and spirally wound so as to form a flat shape. An electrolyte (not shown) is held by the electrode group 1. As shown in FIG. 6, a strip-shaped negative electrode lead 16 is electrically connected to each of plural portions at an end of the negative electrode 3 located on an end face of the electrode group 1. In addition, a strip-shaped positive electrode lead 17 is electrically connected to each of plural portions at an end of the positive electrode 5 located on the end face. The plural negative electrode leads 16 are electrically connected to a negative electrode terminal 6 in a bundled state, as shown in FIG. 6. In addition, the plural positive electrode leads 17 are similarly electrically connected to a positive electrode terminal 7 in a bundled state, although not shown.

A sealing plate 10 made of metal is fixed to the opening portion of the container member 2 made of metal by welding or the like. The negative electrode terminal 6 and the positive electrode terminal 7 are extracted to the outside from outlets provided in the sealing plate 10. On the inner surfaces of the outlets of the sealing plate 10, a negative electrode gasket 8 and a positive electrode gasket 9 are arranged to avoid a short circuit caused by contact respective with the negative electrode terminal 6 and the positive electrode terminal 7. By providing the negative electrode gasket 8 and the positive electrode gasket 19, the airtightness of the secondary battery 100 can be maintained.

A control valve 11 (safety valve) is provided on the sealing plate 10. When the internal pressure of the battery cell is raised, for example by gas generation, the generated gas can be released from the control valve 11 to the outside. As the control valve 11 there may be used, for example, a return type valve that operates when the internal pressure exceeds a predetermined value and functions as a sealing plug when the internal pressure lowers. Alternatively, there may be used a non-return type valve that cannot recover the function as a sealing plug once it operates. In FIG. 5, the control valve 11 is disposed in the middle of the sealing plate 10. However, the position of the control valve 11 may be an end of the sealing plate 10. The control valve 11 may be omitted.

In addition, an inlet 12 is provided on the sealing plate 10. The electrolyte may be put in via the inlet 12. The inlet 12 may be closed with a sealing plug 13 after the electrolyte is put in. The inlet 12 and the sealing plug 13 may be omitted.

### <Various Measuring Methods>

Next, a method for measuring the alkali metal oxide that undergoes proton exchange and a method for measuring the electrode active material will be described.

First, for example, a battery can be discharged in a 25°C environment at 0.1 C current to a rated end voltage, whereby the discharged state of the battery can be achieved.

Next, the battery is disassembled in a glove box filled with argon, and the electrode group is taken out. The taken-out electrode group is washed with an appropriate solvent and dried under reduced pressure. For example, ethyl methyl carbonate may be used for washing. After washing and drying, the surface is examined to make sure there are no white precipitates such as that of lithium salts.

The washed electrode group is dismantled and processed or treated into a measurement sample as appropriate, in accordance with the respective measurement method. For example, in the case of subjecting an electrode (positive electrode or negative electrode) to powder X-ray diffraction measurement, the electrode is cut out from the washed electrode group at a size having the same area as that of a holder of the powder X-ray diffraction apparatus, and used as a measurement sample.

When necessary, the active material is extracted from the electrode to be used as a measurement sample. For example, in the case of subjecting to a composition analysis, the active material is taken out from the washed electrode, and the taken-out active material is analyzed, as described later.

### <Method for Obtaining X-Ray Diffraction Diagram of Oxide according to Powder X-Ray Diffraction>

The crystal structure included in the active material can be examined by powder X-Ray Diffraction (XRD) . The powder X-ray diffraction measurement of the active material is performed as follows.

A measurement sample obtained according to the procedure described above is affixed directly onto the glass holder, and measured. Upon which, the position of peaks originating from the electrode substrate such as a metal foil is measured in advance. The peaks of other components such as an electro-conductive agent and a binder are also measured in advance. In such a case that the peaks of the substrate and active material overlap with each other, it is desirable that the active material-containing layer is separated from the substrate, and subjected to measurement. This is in order to separate the overlapping peaks when quantitatively measuring the peak intensity. For example, the active material-containing layer can be separated by irradiating the electrode substrate with an ultrasonic wave in a solvent.

In the case where the sample has a nature of high orientation, there is possibility of deviation of peak position and variation in an intensity ratio, depending on how the sample is filled. For example, in some cases, there may be observed from the results of the later-described Rietveld analysis, an orientation in which crystal planes are arranged in a specific direction when packing the sample, depending on the shapes of particles. Alternatively, in some cases, influence due to orientation can be seen from measuring of a measurement sample that had been obtained by taking out from a battery.

Such a sample having the nature of high orientation is measured using a capillary (cylindrical glass narrow tube). Specifically, the sample is inserted into the capillary, which is then mounted on a rotary sample table and measured while being rotated. Such a measuring method can provide the result with the influence of orientation alleviated.

When an intensity ratio measured by this method is different from an intensity ratio measured using the flat plate holder or glass holder described above, influence due to orientation is considerable, and therefore measurement results of the rotary sample table are adopted.

As an apparatus for powder X-ray diffraction measurement, SmartLab manufactured by Rigaku is used, for example. Measurement is performed under the following conditions:
X-ray source: Cu target
Output: 45 kV, 200 mA
soller slit: 5 degrees in both incident light and received light
step width (2θ): 0.02 deg
scan rate: 20 deg/min
semiconductor detector: D/teX Ultra 250
sample plate holder: flat glass sample plate holder (0.5 mm thick)
measurement range: range within 5° ≤ 20 ≤ 90°

When another apparatus is used, in order to obtain measurement results equivalent to those described above, measurement using a standard Si powder for powder X-ray diffraction is performed, and measurement is conducted with conditions adjusted such that peak intensities and peak top positions correspond to those obtained using the above apparatus.

Conditions of the above powder X-ray diffraction measurement is set, such that an XRD pattern applicable to Rietveld analysis is obtained. In order to collect data for Rietveld analysis, specifically, the measurement time or X-ray intensity is appropriately adjusted in such a manner that the step width is made 1/3 to 1/5 of the minimum half width of the diffraction peaks, and the intensity at the peak position of strongest reflected intensity is 5,000 cps or more. Rietveld analysis can be performed, for example, based on the method described in "Funmatsu X-sen Kaiseki no Jissai (Reality of Powder X-Ray Analysis) ", first edition (2002), X-Ray Analysis Investigation Conversazione, The Japan Society for Analytical Chemistry, written and edited by Izumi Nakai and Fujio Izumi (Asakura Publishing Co., Ltd.).

Through the above-described method, information on the crystal structure of the measured active material can be obtained. For example, the crystallinity or symmetry of the crystal structure in the measurement sample can be investigated.

### <Method for Examining Active Material Composition>

The composition of the active material can be analyzed using Inductively Coupled Plasma (ICP) emission spectrometry, for example. Hereupon, the abundance ratios of elements depend on the sensitivity of the analyzing device used. Therefore, when the composition of the active material according to the first approach is analyzed using ICP emission spectrometry, the numerical values may deviate from the previously described element ratios due to errors of the measuring device.

In order to measure the composition of the active material assembled into a battery according to ICP emission spectrometry, the following procedure is specifically performed.

First, according to the previously described procedure, an electrode including the target active material to be measured is taken out from the secondary battery, and washed. The washed electrode is put in a suitable solvent, and irradiated with an ultrasonic wave. For example, an electrode is put into ethyl methyl carbonate in a glass beaker, and the glass beaker is vibrated in an ultrasonic washing machine, and thereby the active material-containing layer can be separated from the current collector.

Next, the separated active material-containing layer is dried under reduced pressure. The obtained active material-containing layer is ground in a mortar or the like to provide a powder including the target active material, electro-conductive agent, binder, and the like. By dissolving the powder in an acid, a liquid sample including the active material can be prepared. Here, hydrochloric acid, nitric acid, sulfuric acid, hydrogen fluoride, and the like may be used as the acid. The components in the active material can be found by subjecting the liquid sample to ICP emission spectrometric analysis.

### <Method for Measuring Proton Exchanging Alkali Metal Oxides >

The alkali metal oxide contained in the positive electrode and/or the negative electrode and/or the separator can be measured as follows.

Examples regarding the positive electrode and the negative electrode are given, for example. The alkali metal oxide can be measured by using an electron microscope and X-ray fluorescence analysis (SEM-EDS) in addition to the elemental analysis by the ICP emission spectrometry described above. First, element species that form a main component of the electrode are identified by the ICP emission spectrometry. Next, by analyzing the cross section or the surface of the electrode by the SEM-EDS, the two particles having different elemental compositions, the active material and the alkali metal oxide, can be separated and observed. At this time, particles mainly containing an element which has been analyzed as a main component, can be analyzed as an electrode active material, and the other particles can be analyzed as an alkali metal oxide to be subjected to proton exchange.

The proportion of the number of active material particles in contact with the alkali metal oxide can be measured as follows.

The active material particles and the alkali metal oxide are analyzed using the above-described method with the SEM-EDS, and mapping is performed with elements that characterize respective particles. For example, in a case where a cobalt-containing oxide is analyzed as a positive electrode and a potassium titanium oxide is analyzed as a proton exchanger, mapping can be performed on the positive electrode for cobalt and on the proton exchanger for titanium.

Thereafter, the number of particles in contact is counted using processing by an image processing software. In order to accurately calculate the distribution, it is preferable to perform an analysis in a quadrilateral area with sides of at least 20 times length with respect to the active material particle size. For example, in the case of a particle having a primary particle size of 5 µm, an analysis on a quadrilateral area with sides having lengths of 100 µm or more is preferable. The proportion is calculated by dividing the counted number by the number of all active material particles included in the analyzed image (visual field).

### <Method for Measuring Specific Surface Area of Positive Electrode Active Material and Alkali Metal Oxide>

The specific surface areas of the particles of the positive electrode active material and the alkali metal oxide can be respectively measured as follows.

An outer peripheral diameter of the alkali metal oxide and an outer peripheral diameter of the positive electrode active material can be calculated from the image processing of the previously analyzed mapping image. Each specific surface area ratio matches well with a square of the outer peripheral ratio. For the image analysis in this case, a cross-sectional image of the electrode is preferably used.

The secondary battery according to the first approach includes a positive electrode, a negative electrode, a separator therebetween, and an electrolyte. In the secondary battery, at least one of the positive electrode, the negative electrode, and the separator includes an alkali metal oxide. Of the alkali metal ions included in the alkali metal oxide, 50% or more are exchangeable with protons. A number of active material particles in contact with the alkali metal oxide is 10% or less of the whole of the positive electrode active material included in the positive electrode and the negative electrode active material included in the negative electrode. The secondary battery has excellent cycle life performance.

### (Second Approach)

According to a second approach, a battery module is provided. The battery module includes plural of secondary batteries according to the first approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

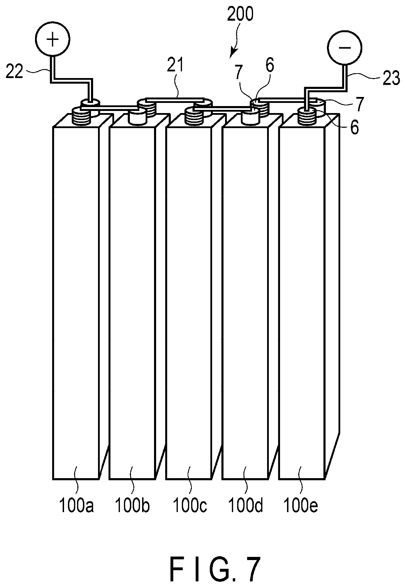

FIG. 7 is a perspective view schematically showing an example of the battery module. The battery module 200 shown in FIG. 7 includes five single-batteries 100a to 100e, four bus bars 21, a positive electrode-side lead 22, and a negative electrode-side lead 23. Each of the five single-batteries 100a to 100e is the secondary battery according to the first approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 7 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the second approach includes the secondary battery according to the first approach. Therefore, the battery module can achieve excellent cycle life performance.

### (Third Approach)

According to a third approach, a battery pack is provided. The battery pack includes a battery module according to the second approach. The battery pack may include a single secondary battery according to the first approach, in place of the battery module according to the second approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

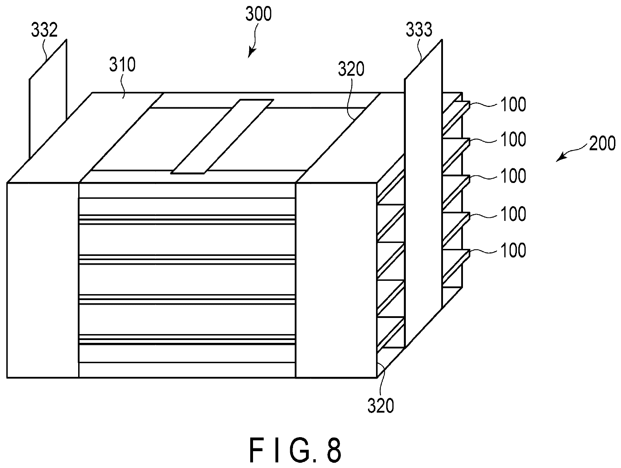

FIG. 8 is a perspective view schematically showing an example of the battery pack according to the approach.

A battery pack 300 includes, for example, a battery module configured of the secondary battery shown in FIGS. 3 and 4. The battery pack 300 includes a housing 310, and a battery module 200 housed in the housing 310. In the battery module 200, plural (for example, five) secondary batteries 100 are electrically connected in series. The secondary batteries 100 are stacked in a thickness direction. The housing 310 has an opening 320 on each of an upper portion and four side surfaces. The side surfaces, from which the positive and negative electrode terminals 6 and 7 of the secondary batteries 100 protrude, are exposed through the opening 320 of the housing 310. A positive electrode terminal 332 for output of the battery module 200 is belt-shaped, and one end thereof is electrically connected to any or all of the positive electrode terminals 7 of the secondary batteries 100, while the other end protrudes beyond the opening 320 of the housing 310 and thus protrudes past the upper portion of the housing 310. Meanwhile, a negative electrode terminal 333 for output of the battery module 200 is belt-shaped, and one end thereof is electrically connected to any or all of the negative electrode terminals 6 of the secondary batteries 100, while the other end protrudes beyond the opening 320 of the housing 310 and thus protrudes past the upper portion of the housing 310.

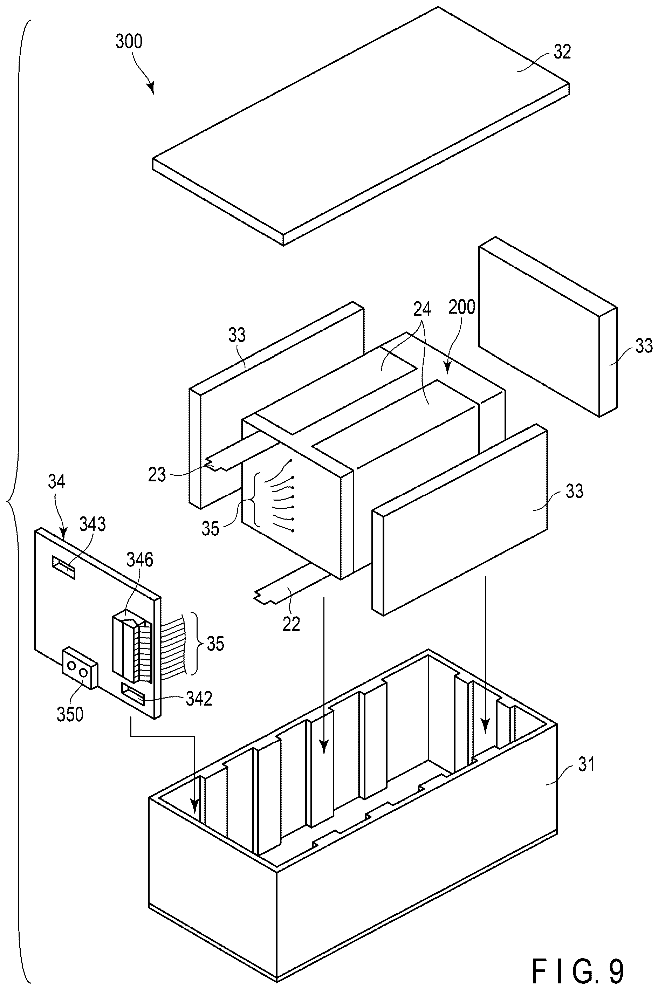

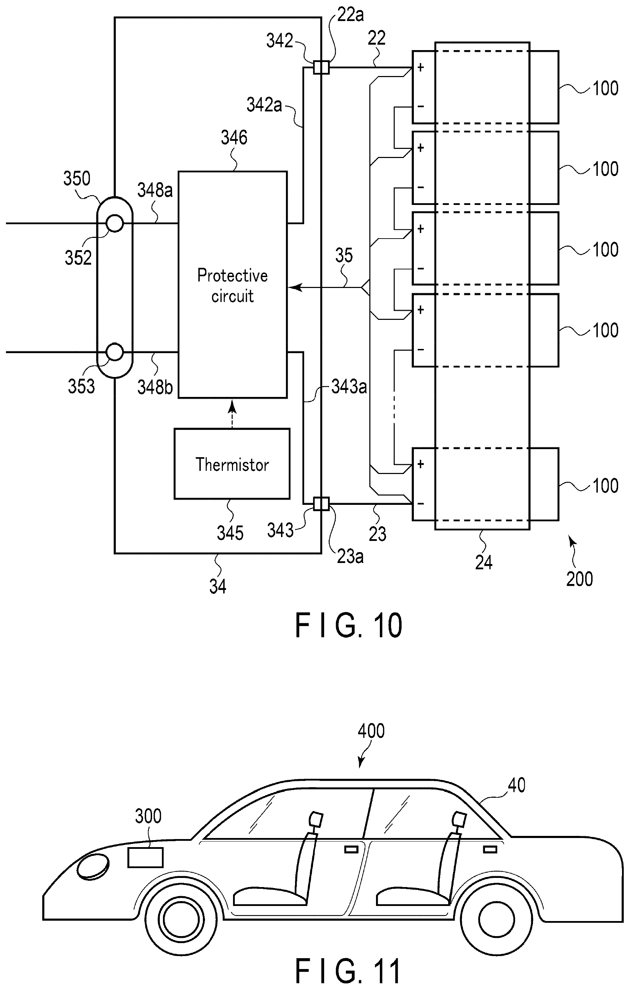

Another example of the battery pack is explained in detail with reference to FIG. 9 and FIG 10. FIG. 9 is an exploded perspective view schematically showing an example of the battery pack. FIG. 10 is a block diagram showing an example of an electric circuit of the battery pack shown in FIG. 9.

A battery pack 300 shown in FIGS. 9 and 10 includes a housing container 31, a lid 32, protective sheets 33, a battery module 200, a printed wiring board 34, wires 35, and an insulating plate (not shown).

The housing container 31 shown in FIG. 9 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the first approach. The plural single-batteries 100 are electrically connected in series, as shown in FIG. 10. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode (s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the third approach is provided with the secondary battery according to the first approach or the battery module according to the second approach. Accordingly, the battery pack can achieve excellent cycle life performance.

### (Fourth Approach)

According to a fourth approach, a vehicle is provided. The battery pack according to the third approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may be installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 11 is a partially see-through diagram schematically showing an example of the vehicle.

A vehicle 400, shown in FIG. 11 includes a vehicle body 40 and a battery pack 300 according to the third approach. In the example shown in FIG. 11, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 11, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

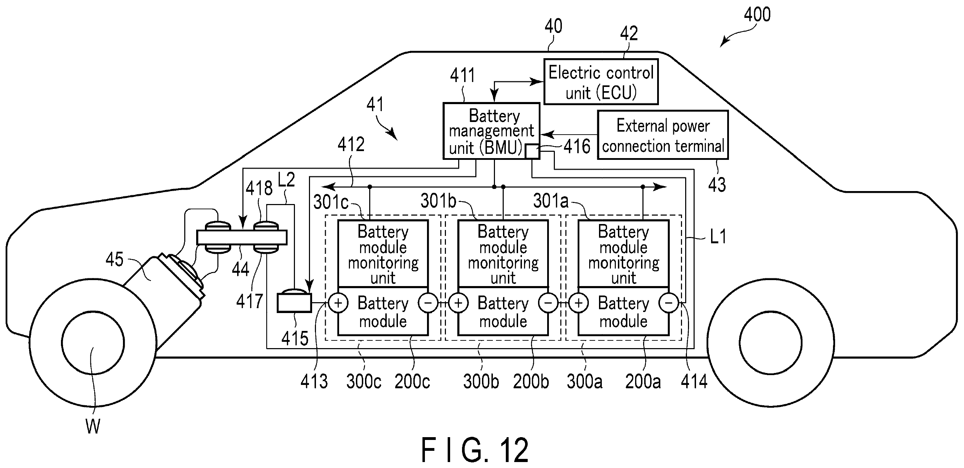

Next, with reference to FIG. 12, an aspect of operation of the vehicle according to the approach is explained.

FIG. 12 is a diagram schematically showing an example of a control system related to an electric system in the vehicle. A vehicle 400, shown in FIG. 12, is an electric automobile.

The vehicle 400, shown in FIG. 12, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 12, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the first approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c) . The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 12) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the fourth approach is installed with the battery pack according to the third approach. Thus, a vehicle with high reliability can be provided.

### (Fifth Approach)

According to a fifth approach, a stationary power supply is provided. The stationary power supply has the battery pack according to the third approach installed therein.

The stationary power supply may have the battery module according to the second approach or the secondary battery according to the first approach installed therein, instead of the battery pack according to the third approach. The stationary power supply according to the approach can realize long life.

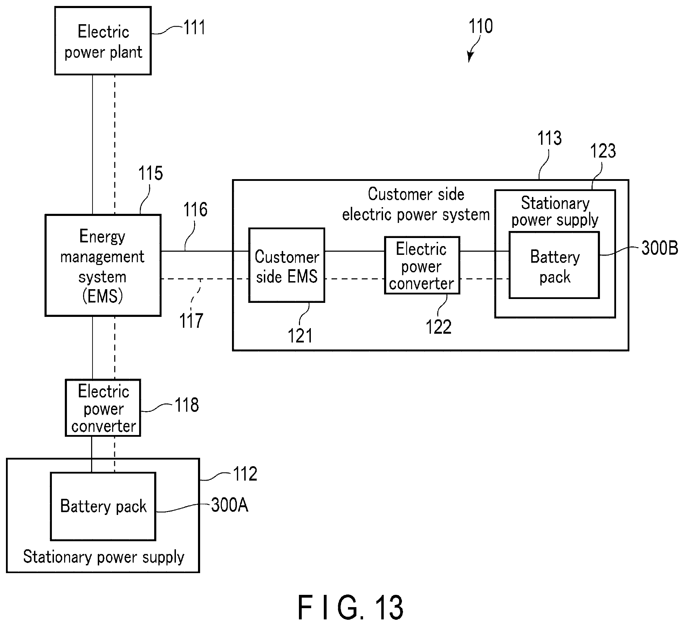

FIG. 13 is a block diagram showing an example of a system including the stationary power supply according to the approach. FIG. 13 is a diagram showing an application example to stationary power supplies 112, 123 as an example of use of battery packs 300A, 300B according to the third approach. In the example shown in FIG. 13, shown is a system 110 in which the stationary power supplies 112, 123 are used. The system 110 includes an electric power plant 111, the stationary power supply 112, a customer side electric power system 113, and an energy management system (EMS) 115. Moreover, an electric power network 116 and a communication network 117 are formed in the system 110, and the electric power plant 111, the stationary power supply 112, the customer side electric power system 113 and the EMS 115 are connected via the electric power network 116 and the communication network 117. The EMS 115 performs control to stabilize the entire system 110 by utilizing the electric power network 116 and the communication network 117.

The electric power plant 111 generates a large capacity of electric power from fuel sources such as thermal power or nuclear power. Electric power is supplied from the electric power plant 111 through the electric power network 116 and the like. In addition, the battery pack 300A is installed in the stationary power supply 112. The battery pack 300A can store electric power and the like supplied from the electric power plant 111. In addition, the stationary power supply 112 can supply the electric power stored in the battery pack 300A through the electric power network 116 and the like. The system 110 is provided with an electric power converter 118. The electric power converter 118 includes a converter, an inverter, a transformer and the like. Thus, the electric power converter 118 can perform conversion between direct current (DC) and alternate current (AC), conversion between alternate currents of frequencies different from each other, voltage transformation (step-up and step-down) and the like. Therefore, the electric power converter 118 can convert electric power from the electric power plant 111 into electric power that can be stored in the battery pack 300A.

The customer side electric power system 113 includes an electric power system for factories, an electric power system for buildings, an electric power system for home use and the like. The customer side electric power system 113 includes a customer side EMS 121, an electric power converter 122, and the stationary power supply 123. The battery pack 300B is installed in the stationary power supply 123. The customer side EMS 121 performs control to stabilize the customer side electric power system 113.

Electric power from the electric power plant 111 and electric power from the battery pack 300A are supplied to the customer side electric power system 113 through the electric power network 116. The battery pack 300B can store electric power supplied to the customer side electric power system 113. Similarly to the electric power converter 118, the electric power converter 122 includes a converter, an inverter, a transformer and the like. Thus, the electric power converter 122 can perform conversion between direct current and alternate current, conversion between alternate currents of frequencies different from each other, voltage transformation (step-up and step-down) and the like. Therefore, the electric power converter 122 can convert electric power supplied to the customer side electric power system 113 into electric power that can be stored in the battery pack 300B.

Note that the electric power stored in the battery pack 300B can be used, for example, for charging a vehicle such as an electric automobile. Also, the system 110 may be provided with a natural energy source. In such a case, the natural energy source generates electric power by natural energy such as wind power and solar light. In addition to the electric power plant 111, electric power is also supplied from the natural energy source through the electric power network 116.

### [Examples]

Examples will be described below, but the approaches are not limited to the examples described below.

### (Example 1)

### <Production of Positive Electrode>

100 parts by mass of lithium nickel manganese composite oxide LiNi_{0.5}Mn_{1.5}O₄ particles as a positive electrode active material, 5 parts by mass of acetylene black as an electro-conductive agent, 5 parts by mass of polyvinylidene fluoride (PVdF) as a binder, and 2 parts by mass of K₂Ti₄O₉ particles as an alkali metal oxide were added to N-methylpyrrolidone (NMP) and mixed to prepare a slurry. The slurry was applied onto both sides of a current collector made of aluminum foil having a thickness of 12 µm, and then dried and pressed, thereby producing a positive electrode having an electrode density (excluding the current collector) of 3.2 g/cm³. The particle sizes of the positive electrode active material particles and the alkali metal oxide particles were adjusted so that the ratio of the specific surface area of the alkali metal oxide with respect to the specific surface area of the positive electrode active material was 2.9.

### <Production of Negative Electrode>

100 parts by mass of a monoclinic niobium-titanium oxide TiNb₂O₇ as a negative electrode active material, 5 parts by mass of acetylene black and 2.5 parts by mass of carbon nanofibers as electro-conductive agents, and 5 parts by mass of PVdF as a binder were added to NMP and mixed to prepare a slurry. The slurry was applied onto both sides of a current collector made of aluminum foil having a thickness of 12 µm, and then dried and pressed, thereby producing a negative electrode having an electrode density (excluding the current collector) of 2.6 g/cm³.

### <Production of Electrode Group>

The positive electrode produced as described above, a separator made of cellulose and having a thickness of 15 µm, the negative electrode produced as described above, and the separator were stacked in this order, and then wound in a spiral shape so that the negative electrode was located on the outermost periphery, thereby producing an electrode group. By hot-pressing this electrode group, a flat-shaped electrode group was produced. The obtained electrode group was housed in a container member made of a laminate film configured by an aluminum foil and polypropylene layers formed on both surfaces of the aluminum foil.

### <Preparation of Nonaqueous Electrolyte>

Under an argon atmosphere, lithium hexafluorophosphate (LiPF₆) was dissolved in propylene carbonate (PC) at a concentration of 1.0 mol/L to prepare a liquid nonaqueous electrolyte (electrolytic solution).

### <Assembly of Secondary Battery>

The electrolytic solution prepared as described above was put into the electrode group housed in the laminate film under an argon atmosphere. Then, an upper part of the laminate film was sealed under reduced pressure to obtain a secondary battery.

### (Example 2)

A secondary battery was manufactured in the same manner as in Example 1, except that K₂Ti₄O₉ as alkali metal oxide was omitted from the positive electrode, and instead, 2 parts by mass of the alkali metal oxide was added to the slurry for preparing the negative electrode.

### (Example 3)

A secondary battery was manufactured in the same manner as in Example 1, except that the positive electrode was produced with the K₂Ti₄O₉ as alkali metal oxide omitted from the slurry, and instead, the alkali metal oxide was attached to the surface of the obtained positive electrode, and then pressing was performed thereon.

### (Example 4)

A secondary battery was manufactured in the same manner as in Example 1, except that the positive electrode was produced with the K₂Ti₄O₉ as alkali metal oxide omitted from the slurry, and instead, the alkali metal oxide was attached to the surface of the negative electrode, and then pressing was performed thereon.

### (Example 5)

In place of the cellulose separator, a solid electrolyte layer was formed on the surface of a negative electrode as described below. A secondary battery was manufactured in the same manner as in Example 1, except that the positive electrode was produced with the K₂Ti₄O₉ as alkali metal oxide omitted from the slurry, and instead, the alkali metal oxide was attached to the surface of the solid electrolyte layer, and then pressing was performed thereon.

A slurry was prepared by mixing Li_{1.5}Al_{0.5}Ti_{1.5}(PO₄)₃ (LATP) and PVdF in NMP at a mass ratio of 80:20. This slurry was applied onto the surface of the negative electrode, the obtained coating film was dried, and then pressing was performed thereon, thereby forming a solid electrolyte layer on the negative electrode.

### (Example 6)

In place of the cellulose separator, a solid electrolyte layer was formed on the surface of the positive electrode as described below. A secondary battery was manufactured in the same manner as in Example 1, except that the positive electrode was produced with the K₂Ti₄O₉ as alkali metal oxide omitted from the slurry, and instead, the alkali metal oxide was attached to the surface of the solid electrolyte layer, and then pressing was performed thereon.

A slurry was prepared by mixing LATP and PVdF in NMP at a mass ratio of 80:20. This slurry was applied onto the surface of the positive electrode, the obtained coating film was dried, and then pressing was performed thereon, thereby forming a solid electrolyte layer on the positive electrode.

### (Example 7)

A secondary battery was manufactured in the same manner as in Example 3, except that the particle sizes of the positive electrode active material particles and the alkali metal oxide particles were adjusted so that the ratio of the specific surface area of the alkali metal oxide with respect to the specific surface area of the positive electrode active material was 1.8.

### (Example 8)

A secondary battery was manufactured in the same manner as in Example 2 except that Na₃Al₂(PO₄)₃ was used as the alkali metal oxide in place of K₂Ti₄O₉.

### (Example 9)

A secondary battery was manufactured in the same manner as in Example 4 except that Na₃Al₂ (PO₄)₃ was used as the alkali metal oxide in place of K₂Ti₄O₉.

### (Example 10)

A secondary battery was manufactured in the same manner as in Example 6 except that Na₃Al₂(PO₄)₃ was used as the alkali metal oxide in place of K₂Ti₄O₉.

### (Example 11)

A secondary battery was manufactured in the same manner as in Example 3 except that Li₂ZrO₃ was used as the alkali metal oxide in place of K₂Ti₄O₉

### (Example 12)

A secondary battery was manufactured in the same manner as in Example 11 except that a lithium nickel cobalt manganese composite oxide LiNi_{0.8}Co_{0.1}Mn_{0.1}O₂ was used as the positive electrode active material in place of lithium nickel manganese composite oxide LiNi_{0.5}Mn_{1.5}O₄.

### (Example 13)

A secondary battery was manufactured in the same manner as in Example 11 except that graphite was used as the negative electrode active material in place of monoclinic niobium-titanium oxide TiNb₂O₇.

### (Comparative Example 1)

A secondary battery was manufactured in the same manner as in Example 1 except that the alkali metal oxide was omitted.

### (Comparative Example 2)

A secondary battery was manufactured in the same manner as in Comparative Example 1 except that a lithium nickel cobalt manganese composite oxide LiNi_{0.8}Co_{0.1}Mn_{0.1}O₂ was used as the positive electrode active material in place of lithium nickel manganese composite oxide LiNi_{0.5}Mn_{1.5}O₄.

### (Comparative Example 3)

A secondary battery was manufactured in the same manner as in Comparative Example 1 except that graphite was used as the negative electrode active material in place of monoclinic niobium-titanium oxide TiNb₂O₇.

### (Comparative Example 4)

A secondary battery was manufactured in the same manner as in Example 1, except that Li₂ZrO₃ was used in place of K₂Ti₄O₉ as the alkali metal oxide, and the particle sizes of the positive electrode active material particles and the alkali metal oxide particles were adjusted so that the ratio of the specific surface area of the alkali metal oxide with respect to the specific surface area of the positive electrode active material was 5.8.

The designs of the secondary batteries manufactured in Examples 1 to 13 and Comparative Examples 1 to 4 described above are summarized in Table 1 below. Specifically, the location where the alkali metal oxide was disposed, the ratio of the specific surface area between the alkali metal oxide and the positive electrode active material, the species of the alkali metal oxide, the composition of the positive electrode active material, and the composition of the negative electrode active material, are shown. The proportion of the number of active materials in contact with the alkali metal oxide, which has been obtained by the method explained above, is also shown.

**[Table 1]**

| | Location of alkali metal oxide | Proportion of number of active materials in contact with alkali metal oxide /% | Alkali metal oxide / Positive electrode active material specific surface area ratio | Species of alkali metal oxide | Positive electrode active material | Negative electrode active material |
|---|---|---|---|---|---|---|
| Example 1 | Inside positive electrode | 9.8 | 2.9 | K₂Ti₄O₉ | LiNi_{0.5}Mn_{1.5}O₄ | TiNb₂O₇ |
| Example 2 | Inside negative electrode | 9.7 | 2.9 | K₂Ti₄O₉ | LiNi_{0.5}Mn_{1.5}O₄ | TiNb₂O₇ |
| Example 3 | Surface of positive electrode | 6.5 | 2.9 | K₂Ti₄O₉ | LiNi_{0.5}Mn_{1.5}O₄ | TiNb₂O₇ |
| Example 4 | Surface of negative electrode | 7.3 | 2.9 | K₂Ti₄O₉ | LiNi_{0.5}Mn_{1.5}O₄ | TiNb₂O₇ |
| Example 5 | Positive electrode side of separator | 6.5 | 2.9 | K₂Ti₄O₉ | LiNi_{0.5}Mn_{1.5}O₄ | TiNb₂O₇ |
| Example 6 | Negative electrode side of separator | 7.4 | 2.9 | K₂Ti₄O₉ | LiNi_{0.5}Mn_{1.5}O₄ | TiNb₂O₇ |
| Example 7 | Surface of positive electrode | 6.5 | 1.8 | K₂Ti₄O₉ | LiNi_{0.5}Mn_{1.5}O₄ | TiNb₂O₇ |
| Example 8 | Inside negative electrode | 9.7 | 2.9 | Na₃Al₂(PO₄)₃ | LiNi_{0.5}Mn_{1.5}O₄ | TiNb₂O₇ |
| Example 9 | Surface of negative electrode | 7.3 | 2.9 | Na₃Al₂(PO₄)₃ | LiNi_{0.5}Mn_{1.5}O₄ | TiNb₂O₇ |
| Example 10 | Negative electrode side of separator | 7.4 | 2.9 | Na₃Al₂(PO₄)₃ | LiNi_{0.5}Mn_{1.5}O₄ | TiNb₂O₇ |

| | Location of alkali metal oxide | Proportion of number of active materials in contact with alkali metal oxide /% | Alkali metal oxide / Positive electrode active material specific surface area ratio | Species of alkali metal oxide | Positive electrode active material | Negative electrode active material |
|---|---|---|---|---|---|---|
| Example 11 | Surface of positive electrode | 6.5 | 2.9 | Li₂ZrO₃ | LiNi_{0.5}Mn_{1.5}O₄ | TiNb₂O₇ |
| Example 12 | Surface of positive electrode | 6.5 | 2.9 | Li₂ZrO₃ | LiNi_{0.8}Co_{0.1}Mn_{0.1}O₂ | TiNb₂O₇ |
| Example 13 | Surface of positive electrode | 6.5 | 2.9 | Li₂ZrO₃ | LiNi_{0.5}Mn_{1.5}O₄ | Graphite |
| Comparative Example 1 | - | 0 | 0 | None | LiNi_{0.5}Mn_{1.5}O₄ | TiNb₂O₇ |
| Comparative Example 2 | - | 0 | 0 | None | LiNi_{0.8}Co_{0.1}Mn_{0.1}O₂ | TiNb₂O₇ |
| Comparative Example 3 | - | 0 | 0 | None | LiNi_{0.5}Mn_{1.3}O₄ | Graphite |
| Comparative Example 4 | Inside positive electrode | 20.5 | 5.8 | Li₂ZrO₃ | LiNi_{0.5}Mn_{1.5}O₄ | TiNb₂O₇ |

### (Evaluation)

### <Evaluation of Rapid Discharge Performance>

The rapid discharge performance of each battery was evaluated as follows. The battery was charged to SOC (State Of Charge) 100% at a charge rate of 1C in a 25°C environment, and then discharged at a discharge rate of 0.2C down to SOC 0%. Subsequently, the battery was charged again up to SOC 100% at a charge rate of 1C, and then discharged at a discharge rate of 5C down to SOC 0%. The discharge capacity was measured during each discharging. The discharge capacity ratio was obtained by dividing the discharge capacity at 5C by the discharge capacity at 0.2C: 5C/0.2C discharge capacity ratio [%] = (5C discharge capacity/0.2C discharge capacity) × 100%

### <Cycle Performance Evaluation>

Each battery was subjected to a cycle test as follows. Charging and discharging were performed for 1000 cycles at a charging and discharging rate of 1C/1C in a 60°C environment within a range between SOC 0% and 90%. After 1000 cycles of charging and discharging, the capacity retention rate, the AC resistance increase rate, and the gas generation amount during that time were measured. Respective measurements were performed as follows.

The capacity retention rate was obtained as follows. Before and after the cycle test, charging and discharging of the battery was performed at a charging and discharging rate of 1C/1C in a 25°C environment within a range between SOC 0% and 100%. The discharge capacity was measured during discharging. The discharge capacity after the test was divided by the discharge capacity before the test to obtain the capacity retention rate: capacity retention rate [%] = (discharge capacity after the test/discharge capacity before the test) × 100%

The AC resistance increase rate was obtained as follows. Before and after the cycle test, the alternating current resistance (AC resistance) was measured as follows. The battery was adjusted to SOC 50%, and then the battery resistance was measured while flowing an alternating current of 1 kHz in a 25°C environment. The value of increase in the AC resistance after the test relative to the AC resistance before the test was divided by the AC resistance before the test to obtain the AC resistance increase rate: AC resistance increase rate [%] = [(AC resistance after the test - AC resistance before the test)/AC resistance before the test] × 100%

The gas generation amount was obtained as follows. The battery volume before the test and the battery volume after the test were measured by the Archimedes method, and the difference therebetween was taken as the gas generation amount. In addition, the gas generation amount was normalized by 0.2C capacity of the battery (unit: ccAh⁻¹).

The evaluation results of respective batteries are shown in Table 2 below. Specifically, the 5C/0.2C discharge capacity ratio, together with the capacity retention rate, the AC resistance increase rate, and the gas generation amount in the 60°C cycle test are summarized in the table.

**[Table 2]**

| | 5 C/0.2 C discharge capacity ratio /% | 60°C cycle test | | |
|---|---|---|---|---|
| | | Capacity retention rate /% | AC resistance increase rate /% | Gas generation amount /ccAh⁻¹ |
| Example 1 | 79 | 92 | 21 | 0.3 |
| Example 2 | 75 | 88 | 24 | 0.58 |
| Example 3 | 84 | 94 | 18 | 0.15 |
| Example 4 | 77 | 89 | 17 | 0.35 |
| Example 5 | 84 | 83 | 21 | 0.14 |
| Example 6 | 79 | 82 | 24 | 0.35 |
| Example 7 | 85 | 89 | 26 | 0.62 |
| Example 8 | 81 | 88 | 24 | 0.23 |
| Example 9 | 84 | 89 | 17 | 0.21 |
| Example 10 | 83 | 82 | 24 | 0.22 |
| Example 11 | 89 | 95 | 12 | 0.14 |
| Example 12 | 90 | 97 | 5.8 | 0.02 |
| Example 13 | 68 | 72 | 38 | 0.85 |
| Comparative Example 1 | 84 | 72 | 48 | 1.92 |
| Comparative Example 2 | 90 | 82 | 20 | 0.48 |
| Comparative Example 3 | 60 | 62 | 52 | 4.25 |
| Comparative Example 4 | 69 | 79 | 89 | 0.15 |

As shown in Table 2, by comparing the batteries using the same combination of active materials in the positive and negative electrodes with each other, it can be seen that Examples 1 to 11 exhibited the same level of rapid discharge performance as Comparative Example 1, Example 12 exhibited the same level of rapid discharge performance as Comparative Example 2, and Example 13 exhibited more excellent rapid discharge performance as compared with Comparative Example 3. In Comparative Example 4, the rapid discharge performance was lower than those of Examples 1 to 11 and Comparative Example 1. This was because of more contact between the alkali metal oxide and the active material, which made the influence of the alkali metal oxide on the discharge performance apparent.

As for the results of the cycle test, when the batteries using the same combination of active materials were similarly compared with each other, the capacity retention rates were higher and the resistance increase rates were lower in Examples 1 to 11 than in Comparative Examples 1 and 4. As for the gas generation during the cycle test, the gas generation amount was smaller in Examples 1 to 11 than in Comparative Example 1. The capacity retention rate was higher, the resistance increase rate was lower, and the gas generation amount was smaller in Example 12 as compared with Comparative Example 2. The capacity retention rate was higher, the resistance increase rate was lower, and the gas generation amount was smaller in Example 13 as compared with Comparative Example 3. It is considered that in Comparative Examples 1 to 3, since no alkali metal oxide was contained, the gas generation could not be suppressed and an influence on the cycle life had appeared. It is considered that in Comparative Example 4, since the amount of the alkali metal oxide was too much, an influence on charging and discharging performance had appeared.

As shown by the above results, by containing the alkali metal oxide that undergoes proton exchange in the positive electrode, the negative electrode, or the separator so that 10% or less contact the active material particles, a secondary battery exhibiting excellent cycle life performance can be obtained. In addition, it can be seen that such a secondary battery is also excellent in rapid discharging performance (rate performance) .

According to at least one approach and examples described above, a secondary battery is provided. The secondary battery includes a positive electrode containing a positive electrode active material, a negative electrode containing a negative electrode active material, a separator between the positive electrode and the negative electrode, and an electrolyte. At least one of the positive electrode, the negative electrode, and the separator contains an alkali metal oxide in which 50% or more of alkali metal ions are exchangeable with protons. The number of active material particles in contact with alkali metal oxide, among the positive electrode active material and the negative electrode active material, is 10% or less of the whole. A secondary battery having such a configuration can exhibit excellent cycle life performance. In addition, the secondary battery can provide a battery pack having excellent cycle life performance, and a vehicle and a stationary power supply including the battery pack.

While certain arrangements have been described, these arrangements have been presented by way of example only, and are not intended to limit the scope of the inventions. Indeed, the invention is defined by the appended claims.

## Claims

1. A secondary battery (100) comprising:
a positive electrode (5) containing a positive electrode active material;
a negative electrode (3) containing a negative electrode active material;
a separator (4) between the positive electrode (5) and the negative electrode (3); and
an electrolyte,
at least one of the positive electrode (5), the negative electrode (3), and the separator (4) containing an alkali metal oxide, 50% or more of alkali metal ions included in the alkali metal oxide being exchangeable with protons, and among the positive electrode active material and the negative electrode active material, a number of active material particles in contact with the alkali metal oxide being 10% or less of the whole.

2. The secondary battery (100) according to claim 1, wherein a ratio of a specific surface area of the alkali metal oxide with respect to a specific surface area of the positive electrode active material is two or more.

3. The secondary battery (100) according to claim 1 or 2, wherein the alkali metal oxide is represented by AₓM_{y}O_{z}, where A is at least one selected from the group consisting of Li, Na, K, Cs, and Rb, M is at least one selected from the group consisting of Mg, Ca, Sr, Ba, Sc, Al, Y, Fe, La, Si, P, S, Ti, Zr, V, Nb, Ta, W, and Mo, and among the M, transition metals have a maximum capable oxidation number.

4. The secondary battery (100) according to claim 3, wherein at least the negative electrode (3) contains the alkali metal oxide, and for the alkali metal oxide contained in the negative electrode (3), M is at least one selected from the group consisting of Mg, Ca, Sr, Ba, Sc, Al, Y, La, Si, P, S, and Zr.

5. The secondary battery (100) according to claim 3 or 4, wherein at least a surface facing the negative electrode (3) in the separator (4) contains the alkali metal oxide, and for the alkali metal oxide contained in the surface facing the negative electrode (3), M is at least one selected from the group consisting of Mg, Ca, Sr, Ba, Sc, Al, Y, La, Si, P, S, and Zr.

6. The secondary battery (100) according to any one of claims 1 to 5, wherein the alkali metal oxide does not contain any alkali metal ion other than an electrolyte main component.

7. The secondary battery (100) according to any one of claims 1 to 6, wherein the positive electrode active material contains a lithium composite oxide exhibiting an operating potential of 4.4 V (vs. Li/Li⁺) or more based on metallic lithium.

8. The secondary battery (100) according to claim 7, wherein the positive electrode active material contains a lithium nickel cobalt manganese composite oxide represented by LiₓNi_{1-y-z}Co_{y}Mn_{z}O₂ where 0 < x ≤ 1, 0 < y < 0.3, 0 < z < 0.3, and y + z < 0.3.

9. The secondary battery (100) according to any one of claims 1 to 8, wherein the negative electrode active material contains at least one selected from the group consisting of a titanium dioxide, a lithium titanate having a spinel structure, an orthorhombic titanium-containing composite oxide, and a monoclinic niobium-titanium oxide.

10. A battery pack (300) comprising the secondary battery (100) according to any one of claims 1 to 9.

11. The battery pack (300) according to claim 10, further comprising:
an external power distribution terminal (350); and
a protective circuit (346).

12. The battery pack (300) according to claim 10 or 11, comprising plural of the secondary battery (100), the secondary batteries (100) being electrically connected in series, in parallel, or in combination of in-series connection and in-parallel connection.

13. A vehicle (400) comprising the battery pack (300) according to any one of claims 10 to 12.

14. The vehicle (400) according to claim 13, wherein the vehicle (400) comprises a mechanism configured to convert kinetic energy of the vehicle (400) into regenerative energy.

15. A stationary power supply (112, 123) comprising the battery pack according to any one of claims 10 to 12.

## Patentansprüche

1. Sekundärbatterie (100), umfassend:
eine positive Elektrode (5), die ein Positivelektrodenaktivmaterial enthält;
eine negative Elektrode (3), die ein Negativelektrodenaktivmaterial enthält;
einen Separator (4) zwischen der positiven Elektrode (5) und der negativen Elektrode (3); und
einen Elektrolyten,
wobei mindestens eines von der positiven Elektrode (5), der negativen Elektrode (3) und dem Separator (4) ein Alkalimetalloxid enthält, wobei 50% oder mehr der in dem Alkalimetalloxid enthaltenen Alkalimetallionen durch Protonen austauschbar sind, und wobei bei dem Positivelektrodenaktivmaterial und dem Negativelektrodenaktivmaterial eine Anzahl der Aktivmaterialpartikel, die mit dem Alkalimetalloxid in Kontakt stehen, 10% oder weniger der Gesamtheit beträgt.

2. Sekundärbatterie (100) gemäß Anspruch 1, wobei ein Verhältnis von der spezifischen Oberfläche des Alkalimetalloxids zu der spezifischen Oberfläche des Positivelektrodenaktivmaterials zwei oder mehr beträgt.

3. Sekundärbatterie (100) gemäß Anspruch 1 oder 2, wobei das Alkalimetalloxid durch AₓM_{y}O_{z} dargestellt wird, worin A mindestens eines ist, das aus der Gruppe, bestehend aus Li, Na, K, Cs und Rb, ausgewählt ist, M mindestens eines ist, das aus der Gruppe, bestehend aus Mg, Ca, Sr, Ba, Sc, Al, Y, Fe, La, Si, P, S, Ti, Zr, V, Nb, Ta, W und Mo, ausgewählt ist, und bei dem M Übergangsmetalle eine maximal mögliche Oxidationszahl aufweisen.

4. Sekundärbatterie (100) gemäß Anspruch 3, wobei mindestens die negative Elektrode (3) das Alkalimetalloxid enthält und für das in der negativen Elektrode (3) enthaltene Alkalimetalloxid M mindestens eines ist, das aus der Gruppe, bestehend aus Mg, Ca, Sr, Ba, Sc, Al, Y, La, Si, P, S und Zr, ausgewählt ist.

5. Sekundärbatterie (100) gemäß Anspruch 3 oder 4, wobei mindestens eine der negativen Elektrode (3) zugewandte Oberfläche im Separator (4) das Alkalimetalloxid enthält und für das in der der negativen Elektrode (3) zugewandten Oberfläche enthaltene Alkalimetalloxid M mindestens eines ist, das aus der Gruppe, bestehend aus Mg, Ca, Sr, Ba, Sc, Al, Y, La, Si, P, S und Zr, ausgewählt ist.

6. Sekundärbatterie (100) gemäß einem der Ansprüche 1 bis 5, wobei das Alkalimetalloxid keine anderen Alkalimetallionen als einen Elektrolyt-Hauptbestandteil enthält.

7. Sekundärbatterie (100) gemäß einem der Ansprüche 1 bis 6, wobei das Positivelektrodenaktivmaterial ein Lithiumkompositoxid enthält, das ein Betriebspotential von 4,4 V (gegenüber Li/Li⁺) oder mehr bezogen auf metallisches Lithium aufweist.

8. Sekundärbatterie (100) gemäß Anspruch 7, wobei das Positivelektrodenaktivmaterial ein Lithium-Nickel-Cobalt-Mangan-Kompositoxid enthält, das durch LiₓNi_{1-y-z}Co_{y}Mn_{z}O₂ dargestellt wird, worin 0 < x ≤ 1, 0 < y < 0,3, 0 < z < 0,3 und y + z < 0,3 ist.

9. Sekundärbatterie (100) gemäß einem der Ansprüche 1 bis 8, wobei das Negativelektrodenaktivmaterial mindestens eines enthält, das aus der Gruppe, bestehend aus einem Titandioxid, einem Lithiumtitanat mit einer Spinellstruktur, einem orthorhombischen titanhaltigen Kompositoxid und einem monoklinen Niob-Titan-Oxid, ausgewählt ist.

10. Batteriepack (300), umfassend die Sekundärbatterie (100) gemäß einem der Ansprüche 1 bis 9.

11. Batteriepack (300) gemäß Anspruch 10, ferner umfassend:
einen externen Stromverteilungsanschluss (350); und
eine Schutzschaltung (346).

12. Batteriepack (300) gemäß Anspruch 10 oder 11, umfassend mehrere der Sekundärbatterien (100), wobei die Sekundärbatterien (100) elektrisch in Reihe, parallel oder in einer Kombination von Reihenschaltung und Parallelschaltung geschaltet sind.

13. Fahrzeug (400), umfassend den Batteriepack (300) gemäß einem der Ansprüche 10 bis 12.

14. Fahrzeug (400) gemäß Anspruch 13, wobei das Fahrzeug (400) einen Mechanismus umfasst, der zur Umwandlung von kinetischer Energie des Fahrzeugs (400) in regenerative Energie konfiguriert ist.

15. Stationäre Stromversorgung (112, 123), umfassend den Batteriepack gemäß einem der Ansprüche 10 bis 12.

## Revendications

1. Batterie secondaire (100) comprenant :
une électrode positive (5) contenant un matériau actif d'électrode positive ;
une électrode négative (3) contenant un matériau actif d'électrode négative ;
un séparateur (4) entre l'électrode positive (5) et l'électrode négative (3) ; et
un électrolyte,
au moins l'un de l'électrode positive (5), de l'électrode négative (3) et du séparateur (4), contenant un oxyde de métal alcalin, 50 % ou plus d'ions de métal alcalin inclus dans l'oxyde de métal alcalin étant échangeables avec des protons, et parmi le matériau actif d'électrode positive et le matériau actif d'électrode négative, un nombre de particules de matériau actif en contact avec l'oxyde de métal alcalin étant 10 % ou moins de l'ensemble.

2. Batterie secondaire (100) selon la revendication 1, dans laquelle un rapport d'une surface spécifique de l'oxyde de métal alcalin à une surface spécifique du matériau actif d'électrode positive est deux ou plus.

3. Batterie secondaire (100) selon la revendication 1 ou 2, dans laquelle l'oxyde de métal alcalin est représenté par AₓM_{y}O_{z}, où A est au moins un sélectionné dans le groupe consistant en Li, Na, K, Cs et Rb, M est au moins un sélectionné dans le groupe consistant en Mg, Ca, Sr, Ba, Sc, Al, Y, Fe, La, Si, P, S, Ti, Zr, V, Nb, Ta, W et Mo, et parmi le M, les métaux de transition présentent un nombre d'oxydation capable maximal.

4. Batterie secondaire (100) selon la revendication 3, dans laquelle au moins l'électrode négative (3) contient l'oxyde de métal alcalin, et pour l'oxyde de métal alcalin contenu dans l'électrode négative (3), M est au moins un sélectionné dans le groupe consistant en Mg, Ca, Sr, Ba, Sc, Al, Y, La, Si, P, S, et Zr.

5. Batterie secondaire (100) selon la revendication 3 ou 4, dans laquelle au moins une surface faisant face à l'électrode négative (3) dans le séparateur (4) contient l'oxyde de métal alcalin, et pour l'oxyde de métal alcalin contenu dans la surface faisant face à l'électrode négative (3), M est au moins un sélectionné dans le groupe consistant en Mg, Ca, Sr, Ba, Sc, AI, Y, La, Si, P, S, et Zr.

6. Batterie secondaire (100) selon l'une quelconque des revendications 1 à 5, dans laquelle l'oxyde de métal alcalin ne contient aucun ion de métal alcalin autre qu'un composant principal d'électrolyte.

7. Batterie secondaire (100) selon l'une quelconque des revendications 1 à 6, dans laquelle le matériau actif d'électrode positive contient un oxyde composite de lithium présentant un potentiel de fonctionnement de 4,4 V (par rapport à Li/Li⁺) ou plus sur la base d'un lithium métallique.

8. Batterie secondaire (100) selon la revendication 7, dans laquelle le matériau actif d'électrode positive contient un oxyde composite de lithium-nickel-cobalt-manganèse représenté par LiₓNi_{1-y-z}Co_{y}Mn_{z}O₂ où 0 < x ≤ 1, 0 < y < 0,3, 0 < z < 0,3, et y + z < 0,3,

9. Batterie secondaire (100) selon l'une quelconque des revendications 1 à 8, dans laquelle le matériau actif d'électrode négative contient au moins un sélectionné dans le groupe consistant en dioxyde de titane, titanate de lithium présentant une structure spinelle, oxyde composite orthorhombique contenant du titane et oxyde monoclinique de niobium-titane.

10. Bloc-batterie (300) comprenant la batterie secondaire (100) selon l'une quelconque des revendications 1 à 9.

11. Bloc-batterie (300) selon la revendication 10, comprenant en outre :
une borne de distribution électrique externe (350) ; et
un circuit de protection (346).

12. Bloc-batterie (300) selon la revendication 10 ou 11, comprenant une pluralité de batteries secondaires (100), les batteries secondaires (100) étant connectées électriquement en série, en parallèle, ou dans une combinaison d'une connexion en série et d'une connexion en parallèle.

13. Véhicule (400) comprenant le bloc-batterie (300) selon l'une quelconque des revendications 10 à 12.

14. Véhicule (400) selon la revendication 13, dans lequel le véhicule (400) comprend un mécanisme configuré pour convertir l'énergie cinétique du véhicule (400) en énergie régénérative.

15. Alimentation électrique fixe (112, 123) comprenant le bloc-batterie selon l'une quelconque des revendications 10 à 12.
